# EUROPÄISCHE PATENTSCHRIFT

(11) **EP 2 373 900 B1**
(45) Veröffentlichungstag und Bekanntmachung des Hinweises auf die Patenterteilung: **15.08.2012**
(21) Anmeldenummer: 09752192.6
(22) Anmeldetag: 17.11.2009
(51) Int. Cl.: F16C 35/077

(54) **LAGERANORDNUNG**
BEARING ARRANGEMENT
AGENCEMENT DE PALIER

(30) Priorität: 02.12.2008 DE 102008044246
(43) Veröffentlichungstag der Anmeldung: 12.10.2011
(73) Patentinhaber: Robert Bosch GmbH, 70442 Stuttgart (DE)
(72) Erfinder: BANHEGYI, Erich, 71732 Tamm (DE); INCE, Cafer, 71701 Schwieberdingen (DE); HOEBEL, Ralf, 75417 Muehlacker (DE); KERN, Denis, 70190 Stuttgart-Ost (DE)
(86) Internationale Anmeldenummer: PCT/EP2009/065287
(87) Internationale Veröffentlichungsnummer: WO 2010/063567

(56) Entgegenhaltungen:
- DE-A1- 4 408 624
- DE-A1-102005 001 824
- DE-B- 1 116 481

## Beschreibung

Die vorliegenden Erfindung betrifft eine Lageranordnung gemäß dem Oberbegriff des Anspruches 1 sowie eine Hybridantriebseinrichtung gemäß dem Oberbegriff des Anspruches 13.

### Stand der Technik

Im Stand der Technik sind Lageranordnungen zur Lagerung eines um eine Rotorachse drehbaren Rotors bekannt. Dabei sind die hierzu eingesetzten Wälzlager in der Regel aus Stahl hergestellt. Da dagegen das in der Regel aus Aluminium hergestellte Lagerschild einer derartigen Lageranordnung, in welchem das Lager sitzt, ein anderes Temperaturverhalten - insbesondere eine andere Wärmeausdehnung - als das Stahllager aufweist, treten oft Probleme bezüglich der Fixierung des Lagers in dem Lagersitz auf. Im Stand der Technik wird, um das Wälzlager im Aluminiumsitz zu fixieren, das Wälzlager radial durch eine Presspassung und axial durch einen Sicherungsring gesichert. Hierbei besteht jedoch die Gefahr des Lösens des Lagersitzes aufgrund der oben beschriebenen unterschiedlichen Wärmeausdehnung der Materialien.

In DE 44 08 624 A1 ist eine Elektromaschine mit einem mindestens ein Lagerschild umfassenden Gehäuse und einem an dem Lagerschild mittels mindestens eines Wälzlagers um eine Rotorachse drehbar gelagerten Rotors beschrieben. Um die oben erwähnten Anforderungen bezüglich der Aufnahme des Wälzlagers im Lagerschild zu lösen, wird hier das Wälzlager an dem Lagerschild mittels eines Einsatzteils gehalten, welches in radialer Richtung zur Rotorachse unterschiedliche Wärmeausdehnungen von Lagerschild und Wälzlager durch ein in dieser Richtung elastisch deformierbares Segment ausgleicht. Das Einsatzteil ist dahei als Tragring ausgebildet und weist zur Aufnahme des Lageraußenrings eine innenzylindrische Lagersitzfläche auf, in welcher der Lageraußenring mit einer Außenfläche in Form einer Passung fixiert gehalten ist. An den Tragring ist cinstückig auf seiner dem Lageraußenring gegenüberliegenden Seite ein in radialer Richtung zur Rotorachse elastisch deformierbares Segment angeformt, welches sich in Form eines axialsymmetrisch zur Rotorachse geformten und konisch erweiternden Rings von einer Innenseite des Tragrings ausgehend in Richtung einer Außenseite desselben erstreckt, wobei sich eine als Ausschnitt aus einem Kegelmantel geformte Ringwand desselben mit einem Kegelwinkel zwischen ungefähr 15 und 20° bezüglich der Rotorachse zunehmend erweitert. An das elastisch deformierbare Segment schließt sich auf seiner dem Tragring abgewandten Seite eine Zentrierschulter an, welche an einer Innenfläche eines Rotorwellendurchbruchs anliegt, um das Einsatzteil hierin zentriert zu halten. Darüber hinaus schließt sich an die Zentrierschulter auf ihrer dem elastischen Segment gegenüberliegenden Seite ein Halteflansch an, welcher eine Frontseite des Lagerschilds übergreift und mittels Schrauben an dem Lagerschild gehalten ist.

Die oben beschriebene Konstruktion einer Lageranordnung zur Kompensation von verschiedenen Wärmeausdehnungen der unterschiedlichen Materialien der einzelnen Komponenten der Lageranordnung und zur sicheren Fixierung des Wälzlagers in dem Lagerschild ist jedoch konstruktiv aufwändig.

Aus der DE 11 16 481 B ist eine Lageranordnung bekannt, welche ein in einem Lagerschild gelagertes Lager aufweist, wobei zwischen dem Lagerschild und dem Lager ein Stahlring vorgesehen ist, der mit dem Lagerschild eine formschlüssige Verbindung bildet.

### Offenbarung der Erfindung

### Vorteile der Erfindung

Eine erfindungsgemäße Lageranordnung, insbesondere zum Lagern eines Rotors einer Elektromaschine, welche ein in einem Lagerschild gelagertes Lager aufweist, weist zwischen dem Lagerschild und dem Lager einen Stahlring auf, der mit dem Lagerschild eine formschlüssige Verbindung bildet. Durch den zwischen dem Lagerschild und dem Lager angeordneten Stahlring wird die unterschiedliche Wärmeausdehnung der Materialien des Lagers und des Lagerschulds auf einfache Art und Weise kompensiert.

Der Stahring weist eine Vielzahl von Oberflächen auf, von denen eine erste Oberfläche dem Lagerschild gegenüberliegt und eine zweite Oberfläche dem Lager gegenüberliegt.

Erfindungsgemäß ist zumindest eine von der Vielzahl von Oberflächen des Stahlrings mit einer verschleißfesten Schicht versehen. Da das Lager einen großen Durchmesser- etwa 72 mm - aufweist, können aufgrund der großen Hebelwirkung zum Außenring des Lagers große Kräfte entstehen, die zu einem hohen Energiccintrag auf den Stahlring führen können. Aufgrund dessen ist die Veredelung der zumindest einen Oberfläche des Stahlrings mit einer mikroporigen thermisch aufgespritzten Schicht vorteilhaft. Der Stahlring erhält dadurch eine höhere Verschleißfestigkeit und Steifigkeit.

Gemäß einer bevorzugten Ausführungsform ist der Stahlring gegossen. Insbesondere ist der Stahlring als Guss hergestellt. Besonders bevorzugt ist der Stahlring aus Kugelgraphitguss hergestellt. Der in das Lagerschild eingegossene Stahlring weist durch die Herstellung aus Guss eine raue Oberfläche im Außendurchmesser auf und dient als Adapter. Durch die raue äußere Oberfläche und die Materialwahl werden am Lager auftretende Kräfte übertragen. Zusätzlich wird der durch die oben beschriebene unterschiedliche Wärmeausdehnung der Materialien entstehende Luftspalt aufgenommen. Die raue Oberfläche wird nicht durch Rändeln oder Spanen erreicht. Die Realisierung des Formschlusses wird allein gewährleistet durch das Herstenungsverfahren des Stahlrings als Guss, wobei dieser nicht nachgearbeitet wird Durch das Entfallen der Nachbearbeitung werden vorteilhafterweise Kosten eingespart.

Alternativ zum aus Guss hergestellten Stahlring kann ein Stahlring aus Strangpress- oder Stangenmaterial zum Einsatz kommen. Dieser Stahlring muss jedoch, um eine formschlüssige Verbindung zwischen dem Aluminiumguss des Lagerschilds und dem Stahlring zu erreichen, auf der Außenseite entsprechend bearbeitet werden. Diese Bearbeitung umfasst die Darstellung von Abflachungen im Umfang, eine konische Form in axialer Richtung und eine definierte Rauheit (z. B. Rändel) im gesamten Außendurchmesser.

Vorzugsweise ist der Lagerschild aus Aluminium, insbesondere aus Aluminiumguss, hergestellt. Das Aluminium des Lagerschilds kann in die Gussoberfläche des Stahlrings eindringen und somit wird eine optimale Verbindung zwischen dem Aluminium des Lagerschilds und dem Stahlring erreicht. Wie oben beschrieben, wird die unterschiedliche Wärmeausdehnung der Materialeien durch den Formschluss aufgenommen, so dass ein Lösen des Stahlringes im Aluminiumguss nicht möglich ist.

Gemäß noch einer weiteren bevorzugten Ausführungsform ist die zweite Oberfläche des Stahlrings mit der verschleißfesten Schicht versehen. Hierdurch erhält die Oberfläche des Stahlrings, die dem Lageraußenring gegenüberliegt, eine höhere Steifigkeit und Verschleißfestigkeit, die aufgrund des Mikroschlupfes und der Relativbewegungen zwischen dem Lageraußenring und dem Stahlring benötigt wird. Durch das Aufbringen der Schicht ist es möglich, eine weit höhere Lebensdauer der Lageranordnung vorzusehen. Außerdem ist es besonders vorteilhaft, wenn lediglich die zweite Öberfläche des Stahlrings veredelt wird, da die erste Oberfläche, die mit dem Lagerschild in Verbindung steht, die durch den Guss erzleiten Eigenschaften bewahrt.

Vorzugsweise ist die Schicht mittels eines PVD- oder CVD-Verfahrens auf die zumindest eine Oberfläche des Stahlrings aufgebracht.

Gemäß noch einer weiteren bevorzugten Ausführungsform ist die Schicht eine chrombasierende Schicht.

Alternativ kann die Schicht eine titanhaltige Schicht sein.

Besonders bevorzugt enthält die Schicht TiNi AlSi12.

Gemäß einer weiteren bevorzugten Ausführungsform ist das Lager ein Wälzlager.

Auch ist es bevorzugt, wenn weiterhin ein Sicherungsring zur radialen Sicherung des Lagers vorgesehen ist.

Gemäß der Erfindung wird weiterhin eine Hybridantriebseinrichtung bereitgestellt, welche zumindest eine erste Antriebseinrichtung, insbesondere eine Verbrennungskraftmaschine, und zumindest eine zweite Antriebseinrichtung, insbesondere eine Elektromaschine, aufweist, wobei die erste und zweite Antriebseinrichtung über eine Antriebswelle miteinander gekoppelt sind, und wobei die Hybridantriebseinrichtung zumindest eine Lageranordnung mit einem oder mehreren der oben beschriebenen Merkmale aufweist.

### Kurze Beschreibung der Zeichnungen

Im Nachfolgenden wird ein Ausführungsbeispiel der Erfindung unter Bezugnahme auf die beigefügten Zeichnungen näher beschrieben. Es zeigt:
- Fig. 1: eine stark schematisierte Darstellung einer Hybridantriebseinrichtung,
- Fig. 2: eine Schnittansicht einer Lageranordnung gemäß einer Ausführungsform.

### Ausführungsformen der Erfindung

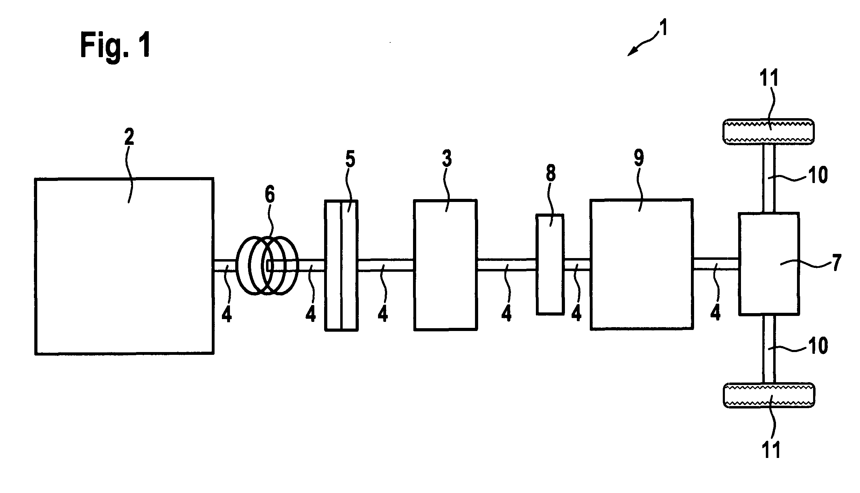

In Fig. 1 ist eine Hybridantriebseinrichtung 1 für ein Kraftfahrzeug schematisch dargestellt. Die Hybridantriebseinrichtung 1 für ein Kraftfahrzeug umfasst eine Verbrennungskraftmaschine 2 sowie eine Elektromaschine 3, die als Motor und Generator fungiert, jeweils zum Antreiben oder Verzögern des Kraftfahrzeuges. Die Verbrennungskraftmaschine 2 und die Elektromaschine 3 sind mittels einer Antriebswelle 4 miteinander verbunden. Die mechanische Koppelung zwischen der Verbrennungskraftmaschine 2 und der Elektromaschine 3 kann mittels einer Kupplung 5 hergestellt und aufgehoben werden.

Ferner ist in der Antriebswelle 4, welche die Verbrennungskraftmaschine 2 und die Elektromaschine 3 miteinander koppelt, eine Elastizität 6 angeordnet. Die Elektromaschine 3 ist mit einem Differentialgetriebe 7 mechanisch gekoppelt. In der Antriebswelle 4, welche die Elektromaschine 3 und das Differentialgetriebe 7 miteinander verbindet, sind ein Wandler 8 und ein Getriebe 9 angeordnet. Mittels des Differentialgetriebes 7 werden über die Radachsen 10 die Antriebsräder 11 angetrieben. Die hier nicht im Detail dargestellte Elektromaschine 4 für die Hybridantriebseinrichtung 1 kann als Innenpolmaschine mit einem feststehenden Stator (nicht dargestellt) und einem rotierenden Rotor (nicht dargestellt) ausgebildet sein, wobei der Rotor um eine Rotorwelle drehbar gelagert ist.

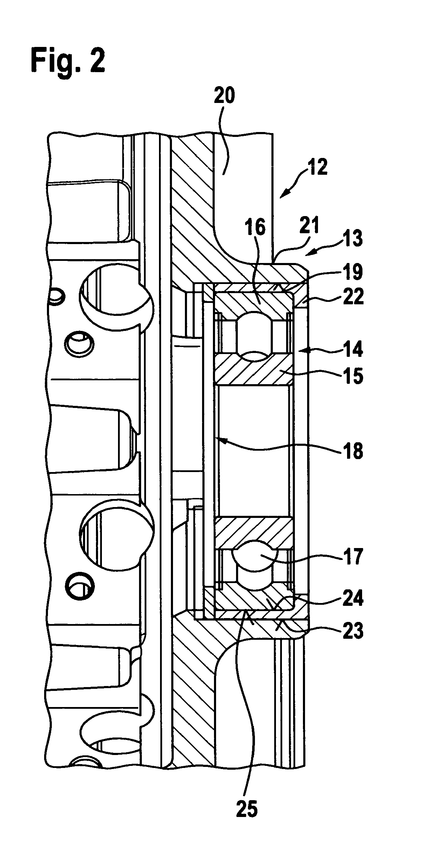

Die Lageranordnung 12 wird im Zusammenhang mit Figur 2 detailliert beschrieben, welche eine Schnittansicht der Lageranordnung 12 gemäß einer Ausführungsform zeigt. Die Lageranordnung 12 umfasst ein Lagerschild 13, welches aus Aluminium hergestellt ist und einen Aluminiumsitz für das als Wälzlager ausgebildete Lager 14 bildet. Das Lager 14 ist aus Stahl hergestellt und weist einen Lagerinnenring 15 und einen Lageraußenring 16 auf, die über Wälzkörper 17 verbunden sind.

Zur axialen Sicherung des Lagers 14 in dem Aluminiumsitz bzw. in dem Lagerschild 13 ist ein Sicherungsring 18 vorgesehen. Um die unterschiedliche Wärmedehnung des aus Stahl hergestellten Lagers 14 und des aus Aluminium hergestellten Lagerschilds 13 aufzunehmen, ist zwischen dem Lager 14 und dem Lagerschild 13 ein Stahlring 22 bzw. eine Stahlbuchse angeordnet. Dabei ist der Stahlring 22 zwischen einem Lageraußenring 16 und dem Lagerschild 13 bzw. einer inneren Oberfläche 19 eines L-förmig von einem Grundkörper 20 des Lagerschilds 13 abgewinkelten Abschnitts 21 eingegossen. Der Stahlring 22 ist aus Guss hergestellt, und ist nicht beispielsweise durch Rändeln oder Spanen nachgearbeitet. Dadurch weist der Stahlring eine raue Oberfläche auf, in die das Aluminium des Lagerschilds 13 eindringen kann, wodurch eine optimale Verbindung erwirkt wird. Die unterschiedliche Wärmeausdehnung des Aluminiums des Lagerschilds 13 und des aus Stahl hergestellten Lagers 14 wird über den Formschluss aufgenommen, so dass ein Lösen des Stahlrings 22 von oder aus dem Lagerschild 13 nicht möglich ist.

Darüber hinaus weist der Stahlring 22 eine äußere erste Oberfläche 23 auf, welche dem Lagerschild 13 bzw. der inneren Oberfläche 19 des L-förmig von dem Grundkörper 20 des Lagerschilds 13 abgewinkelten Abschnitts 21 gegenüberliegt, und eine innere zweite Oberfläche 24, welche dem Lager 14 bzw. einer äußeren Oberfläche 25 des Lageraußenrings 16 gegenüberliegt. In der dargestellten Ausführungsform ist lediglich die zweite Oberfläche 24 des Stahlrings 22 veredelt. Dabei ist die zweite Oberfläche 24 mit einer mikroporigen thermisch aufgespritzten Schicht versehen, welche aus TiNi AlSi₁₂ besteht. Alternativ kann eine chrombasierte Beschichtung mittels eines PVD- oder CVD-Verfahrens auf die zweite Oberfläche 24 des Stahlrings 22 aufgebracht sein. Auch können weitere Oberflächen des Stahlrings 22 beschichtet sein. Wichtig ist jedoch, dass die erste Oberfläche 23, die mit dem Lagerschild 13 in Kontakt steht, ihre Oberflächenrauigkeit bzw. ihre oben beschriebenen Eigenschaften beibehält.

Die Einzelheiten der verschiedenen Ausführungsbeispiele können miteinander kombiniert werden, sofern nichts Gegenteiliges erwähnt wird.

Insgesamt betrachtet sind mit der erfindungsgemäßen Lageranordnung 12 wesentliche Vorteile verbunden. Die unterschiedliche Wärmeausdehnung der einzelnen Komponenten der Lageranordnung, insbesondere des Materials des Lagerschilds 13 und des Materials des Lagers 14, kann durch den Stahlring 22 kompensiert werden und ein sicherer Sitz des Lagers 14 wird gewährleistet, was wiederum zu einer höheren Lebensdauer führt.

## Patentansprüche

1. Lageranordnung (12), insbesondere zum Lagern eines Rotors einer Elektromaschine (3), welche ein in einem Lagerschild (13) gelagertes Lager (14) aufweist wobei zwischen dem Lagerschild (13) und dem Lager (14) ein Stahlring (22) vorgesehen ist, der mit dem Lagerschild (13) eine formschlüssige Verbindung bildet, und wobei der Stahlring (22) eine Vielzahl von Oberflächen aufweist, von denen eine erste Oberfläche (23) dem Lagerschild (13) gegenüberliegt und eine zweite Oberfläche (24) dem Lager (14) gegenüberliegt, **dadurch gekennzeichnet, dass** zumindest eine der Vielzahl von Oberflächen des Stahlrings (22) mit einer verschleißfesten Schicht versehen ist.

2. Lageranordnung (12) nach Anspruch 1, **dadurch gekennzeichnet, dass** die zweite Oberfläche (24) des Stahlrings (22) mit der verschleißfesten Schicht versehen ist.

3. Lageranordnung (12) nach Anspruch 1 oder 2, **dadurch gekennzeichnet, dass** die Schicht mittels eines PVD- oder CVD- Verfahrens auf die zumindest eine der Vielzahl von Oberflächen des Stahlrings (22) aufgebracht ist.

4. Lageranordnung (12) nach einem oder mehreren der Ansprüche 1 bis 3, **dadurch gekennzeichnet, dass** die Schicht eine chrombasierende Schicht ist.

5. Lageranordnung (12) nach einem oder mehreren der Ansprüche 1 bis 4, **dadurch gekennzeichnet, dass** die Schicht eine titanhaltige Schicht ist.

6. Lageranordnung (12) nach einem oder mehreren der Ansprüche 1 bis 5, **dadurch gekennzeichnet, dass** die Schicht aus TiNi AlSi12 besteht.

7. Lageranordnung (12) nach einem oder mehreren der Ansprüche bis 6, **dadurch gekennzeichnet, dass** das Lager (14) ein Wälzlager ist.

8. Lageranordnung (12) nach einem oder mehreren der Ansprüche 1 bis 7,**dadurch gekennzeichnet, dass** ein Sicherungsring (18) zur radialen Sicherung des Lagers (14) vorgesehen ist.

9. Lageranordnung (12) nach Anspruch 1, **dadurch gekennzeichnet, dass** der Stahlring (22) gegossen ist, insbesondere aus Guss hergestellt ist.

10. Lageranordnung (12) nach Anspruch 1 oder 2, **dadurch gekennzeichnet, dass** das Lagerschild (13) aus Aluminium, insbesondere aus Aluminiumguss, hergestellt ist.

11. Hybridantriebseinrichtung (1), welche zumindest eine erste Antriebseinrichtung, insbesondere eine Verbrennungskraftmaschine (2), und zumindest eine zweite Antriebseinrichtung, insbesondere eine Elektromaschine (3), aufweist, wobei die erste und zweite Antriebseinrichtung über eine Antriebswelle (4) miteinander gekoppelt sind, **dadurch gekennzeichnet, dass** die Hybridantriehseinrichtung (1) zumindest eine Lageranordnung (12) gemäß einem oder mehreren der Ansprüche 1 bis 10 aufweist.

## Claims

1. Bearing arrangement (12), in particular for supporting a rotor of an electric machine (3), which comprises a bearing (14) supported in a bearing shield (13), wherein a steel ring (22) is provided between the bearing shield (13) and the bearing (14) and forms a form-fitting connection with the bearing shield (13), and wherein the steel ring (22) has a multiplicity of surfaces, of which a first surface (23) lies opposite the bearing shield (13) and a second surface (24) lies opposite the bearing (14), **characterized in that** at least one of the multiplicity of surfaces of the steel ring (22) is provided with a wear-resistant layer.

2. Bearing arrangement (12) according to Claim 1, **characterized in that** the second surface (24) of the steel ring (22) is provided with the wear-resistant layer.

3. Bearing arrangement (12) according to Claim 1 or 2, **characterized in that** the layer is applied to the at least one of the multiplicity of surfaces of the steel ring (22) by means of a PVD or CVD process.

4. Bearing arrangement (12) according to one or more of Claims 1 to 3, **characterized in that** the layer is a chromium-based layer.

5. Bearing arrangement (12) according to one or more of Claims 1 to 4, **characterized in that** the layer is a titanium-containing layer.

6. Bearing arrangement (12) according to one or more of Claims 1 to 5, **characterized in that** the layer consists of TiNi AlSi12.

7. Bearing arrangement (12) according to one or more of Claims 1 to 6, **characterized in that** the bearing (14) is a rolling bearing.

8. Bearing arrangement (12) according to one or more of Claims 1 to 7, **characterized in that** a securing ring (18) for radially securing the bearing (14) is provided.

9. Bearing arrangement (12) according to Claim 1, **characterized in that** the steel ring (22) is cast, in particular is produced from cast iron.

10. Bearing arrangement (12) according to Claim 1 or 2, **characterized in that** the bearing shield (13) is produced from aluminium, in particular from cast aluminium.

11. Hybrid drive device (1) which comprises at least a first drive device, in particular an internal combustion engine (2), and at least a second drive device, in particular an electric machine (3), wherein the first drive device and the second drive device are coupled to one another via a drive shaft (4), **characterized in that** the hybrid drive device (1) comprises at least one bearing arrangement (12) according to one or more of Claims 1 to 10.

## Revendications

1. Ensemble de palier (12), en particulier pour le montage du rotor d'une machine électrique (3), l'ensemble présentant
un palier (14) monté dans un flasque de palier (13),
une bague en acier (22) reliée en correspondance géométrique au flasque de palier (13) étant prévue entre le flasque de palier (13) et le palier (14),
la bague en acier (22) présentant plusieurs surfaces dont une première (23) est située face au flasque de palier (13) et une deuxième (24) est située face au palier (14),
**caractérisé en ce que**
au moins l'une des différentes surfaces de la bague en acier (22) est dotée d'une couche résistant à l'usure.

2. Ensemble de palier (12) selon la revendication 1, **caractérisé en ce que** la deuxième surface (24) de la bague en acier (22) est dotée de la couche résistant à l'usure.

3. Ensemble de palier (12) selon les revendications 1 ou 2, **caractérisé en ce que** la couche est appliquée sur la ou les différentes surfaces de la bague en acier (22) au moyen d'une opération de PVD ou de CVD.

4. Ensemble de palier (12) selon l'une ou plusieurs des revendications 1 à 3, **caractérisé en ce que** la couche est une couche à base de chrome.

5. Ensemble de palier (12) selon l'une ou plusieurs des revendications 1 à 4, **caractérisé en ce que** la couche est une couche contenant du titane.

6. Ensemble de palier (12) selon l'une ou plusieurs des revendications 1 à 5, **caractérisé en ce que** la couche est constituée de TiNi AlSi12.

7. Ensemble de palier (12) selon l'une ou plusieurs des revendications 1 à 6, **caractérisé en ce que** le palier (14) est un palier de roulement.

8. Ensemble de palier (12) selon l'une ou plusieurs des revendications 1 à 7, **caractérisé en ce qu'**une bague de blocage (18) est prévue pour bloquer radialement le palier (14).

9. Ensemble de palier (12) selon la revendication 1, **caractérisé en ce que** la bague en acier (22) est coulée et en particulier moulée.

10. Ensemble de palier (12) selon les revendications 1 ou 2, **caractérisé en ce que** le flasque de palier (13) est réalisé en aluminium et en particulier en aluminium moulé.

11. Dispositif d'entraînement hybride (1) qui présente au moins un premier dispositif d'entraînement, en particulier un moteur à combustion interne (2), et au moins un deuxième dispositif d'entraînement, en particulier une machine électrique (3), le premier et le deuxième dispositif d'entraînement étant accouplés l'un à l'autre par un arbre d'entraînement (4), **caractérisé en ce que**
le dispositif d'entraînement hybride (1) présente au moins un ensemble de palier (12) selon un ou plusieurs des revendications 1 à 10.
